# EUROPÄISCHE PATENTSCHRIFT

(11) **EP 0 523 467 B1**
(45) Veröffentlichungstag und Bekanntmachung des Hinweises auf die Patenterteilung: **28.02.1996**
(21) Anmeldenummer: 92111271.0
(22) Anmeldetag: 03.07.1992
(51) Int. Cl.: F01K 23/06, F01K 23/10

(54) **Verfahren zum Betreiben einer Gas- und Dampfturbinenanlage und Anlage zur Durchführung des Verfahrens**
Method of operating a gas and steam turbines plant and plant for carrying out the method
Procédé pour opérer une installation à turbines à gaz et à vapeur et installation pour la mise en oeuvre du procédé

(30) Priorität: 17.07.1991 DE 4123730
(43) Veröffentlichungstag der Anmeldung: 20.01.1993
(73) Patentinhaber: SIEMENS AKTIENGESELLSCHAFT, D-80333 München (DE)
(72) Erfinder: Brückner, Hermann, W-8525 Uttenreuth (DE); Emsperger, Werner, Dipl.-Ing., W-8520 Erlangen (DE)

(56) Entgegenhaltungen:
- EP-A- 0 129 167
- US-A- 4 288 979
- VGB KRAFTWERKSTECHNIK. Bd. 71, Nr. 7, Juli 1991, ESSEN DE Seiten 619 - 631 B. GERICKE

## Beschreibung

Die Erfindung betrifft ein Verfahren zum Betreiben einer Gasund Dampfturbinenanlage, bei dem das in der Gasturbine entspannte Arbeitsmittel zur Erzeugung von Dampf für die Dampfturbine genutzt wird, wobei dem Wasser-Dampf-Kreislauf der Dampfturbine eine Teilmenge vorgewärmten und unter hohem Druck stehenden Wassers entnommen und bei Verwendung von Kohlegas als Brennstoff für die Gasturbine zur Kühlung des Kohlegases verwendet wird. Sie richtet sich weiter auf eine nach diesem Verfahren arbeitende Gas- und Dampfturbinenanlage.

Bei einer Gas- und Dampfturbinenanlage wird die im Abgas aus der Gasturbine enthaltene Wärme in einem Abhitzekessel zur Erzeugung von Dampf für die Dampfturbine genutzt. Dabei umfaßt der Wasser-Dampf-Kreislauf der Dampfturbine mindestens zwei Druckstufen, die jeweils aus einem Vorwärmer sowie einem Verdampfer und einem Überhitzer aufgebaut sind. Bei einer Anlage mit einem der Gasturbine vorgeschalteten Kohlevergaser wird dem Wasser-Dampf-Kreislauf vorgewärmtes Wasser zur Kühlung von bei der Kohlevergasung erzeugtem Rohgas entnommen. Die dabei gewonnene Warme wird ebenfalls zur Erzeugung von Dampf für die Dampfturbine genutzt.

Eine derartige Anlage ist aus der Druckschrift "VGB Kraftwerkstechnik", 71 (1991), Heft 7, Seite 619 ff. bekannt.

Bei Teillastbetrieb einer derartigen Anlage nimmt die erzeugte Frischdampfmenge im Verhältnis zu der im Abgas aus der Gasturbine enthaltenen Wärmeleistung, die für die Vorwärmung des Speisewassers verfügbar ist, überproportional ab. Dies ist insbesondere auch bei Verwendung von Erdgas als Brennstoff für die Gasturbine, das heißt bei Erdgasbetrieb, der Fall, weil dann die Speisewassermenge und demzufolge auch die Frischdampfmenge um den Anteil des bei Kohlegasbetrieb dem Wasser-Dampf-Kreislauf für die Kohlevergasung entnommenen Wassers verringert ist. Dabei besteht sowohl bei Teillastbetrieb als auch bei Erdgasbetrieb die Gefahr, daß das überproportional große Wärmeangebot im Abhitzekessel zu einer Verdampfung, insbesondere im Hochdruck-Vorwarmer oder Economizer führt. Dadurch können Korrosionsschäden an den Heizflächen des Vorwärmers auftreten. Außerdem steigt die Temperatur des den Abhitzekessel verlassenden Abgases auf extrem hohe Werte an, so daß der Gesamtwirkungsgrad der Anlage nur begrenzt ist.

Der Erfindung liegt die Aufgabe zugrunde, ein Verfahren zum Betreiben einer Gas- und Dampfturbinenanlage sowie eine derartige Anlage derart auszubilden, daß unabhängig vom eingesetzten Brennstoff bei allen Betriebszuständen, also auch bei Erdgasbetrieb oder Teillastbetrieb, unter Vermeidung von thermodynamischen Verlusten ein möglichst hoher Gesamtwirkungsgrad erreicht wird.

Bezüglich des Verfahrens wird diese Aufgabe dadurch gelöst, daß sowohl bei Teillastbetrieb der Anlage als auch bei Verwendung von Erdgas als Brennstoff für die Gasturbine die Teilmenge des entnommenen Wassers entspannt und der dabei gebildete Dampf bei mittlerem Druck überhitzt wird. Das bei der Entspannung der Teilmenge zurückbleibende Wasser wird bei dem mittleren Druck verdampft. Der Dampf wird zweckmäßigerweise zusammen mit dem bei der Entspannung gebildeten Dampf bei mittlerem Druck überhitzt und im überhitzten Zustand einem Mitteldruckteil der Dampfturbine zugeführt.

Aus der EP-OS 0 410 111 ist eine Gas- und Dampfturbinenanlage bekannt, bei der der Dampf für die Dampfturbine in einer Hochdruckstufe und in einer Niederdruckstufe des Wasser-Dampf-Kreislaufs erzeugt wird. Bei Teillastbetrieb wird die durch die Heizflächen des Hochdruck-Vorwärmers oder Economizers strömende Wassermenge soweit erhöht, daß dort keine Verdampfung auftreten kann. Eine für die Dampferzeugung nicht benötigte Teilmenge des unter hohem Druck stehenden und vorgewärmten Speisewassers wird zunächst in einer ersten Entspannungsstufe auf mittleren Druck entspannt, und der dabei gebildete Dampf wird bei mittlerem Druck überhitzt. Das bei der Entspannung zurückbleibende Wasser wird in einer zweiten Entspannungsstufe auf niedrigen Druck entspannt, und der dabei gebildete Dampf wird bei niedrigem Druck überhitzt. Das bei der zweiten Entspannung zurückbleibende Wasser wird in einen in den Wasser-Dampf-Kreislauf integrierten Speisewasserbehälter zurückgeführt. Dabei treten allerdings in jeder Entspannungsstufe thermodynamische Verluste auf.

Gemäß einer vorteilhaften Weiterbildung des erfindungsgemäßen Verfahrens wird dem Wasser-Dampf-Kreislauf eine weitere Teilmenge des vorgewärmten und unter hohem Druck stehenden Wassers entnommen und bei dem mittleren Druck verdampft. Dabei wird vorteilhafterweise das gesamte bei mittlerem Druck verdampfte Wasser zusammen mit aus einem Hochdruckteil der Dampfturbine abströmenden Dampf überhitzt.

Zur Kühlung des Kohlegases wird dem Wasser-Dampf-Kreislauf zweckmäßigerweise maximal 60 % des vorgewärmten und unter hohem Druck stehenden Wassers entnommen.

Bezüglich der Anlage mit einem der Gasturbine nachgeschalteten Abhitzekessel, der einen in den Wasser-Dampf-Kreislauf der Dampfturbine geschalteten Hochdruck-Vorwärmer und eine dem Hochdruck-Vorwärmer nachgeschaltete Hochdruck-Heizeinrichtung umfaßt, und mit einer der Gasturbine vorgeschalteten Kohlevergasungsanlage, in die eine in Strömungsrichtung des Wassers hinter dem Hochdruck-Vorwärmer an den Wasser-Dampf-Kreislauf angeschlossene Abströmleitung führt, wird die Aufgabe erfindungsgemäß gelöst durch eine mit der Abströmleitung verbundene Verbindungsleitung, die an eine Wasser-Dampf-Trommel einer Mitteldruckstufe des Wasser-Dampf-Kreislaufs angeschlossen ist, und durch eine Umschaltvorrichtung, mittels der die in der Abströmleitung geführte Teilmenge vorgewärmten Wassers bei Teillastbetrieb der Anlage oder bei Verwendung von Erdgas als Brennstoff für die Gasturbine der Wasser-Dampf-Trommel zuführbar ist.

Gemäß einer zweckmäßigen Ausgestaltung der erfindungsgemäßen Anlage ist die Wasser-Dampf-Trommel über ein Ventil an die Abströmleitung angeschlossen. Die Wasser-Dampf-Trommel ist außerdem vorteilhafterweise über einen im Abhitzekessel angeordneten Zwischenüberhitzer an einen Mitteldruckteil der Dampfturbine angeschlossen.

Der Hochdruck-Vorwärmer ist vorteilhafterweise aus zwei hintereinander geschalteten Heizflächen aufgebaut. Dabei ist der Verdampfer der Mitteldruck-Heizeinrichtung zweckmäßigerweise im Abhitzekessel zwischen den Heizflächen des Hochdruck-Vorwärmers angeordnet.

Zur Einstellung der Wassermenge in der Wasser-Dampf-Trommel ist diese im Bereich zwischen den Heizflächen des Hochdruck-Vorwärmers an den Wasser-Dampf-Kreislauf angeschlossen.

Die mit der Erfindung erzielten Vorteile bestehen insbesondere darin, daß unabhängig vom eingesetzten Brennstoff für die Gasturbine in allen Lastbereichen ein ausreichender Wasserdurchsatz durch den Hochdruck-Vorwärmer oder Economizer gewährleistet ist, so daß dort eine Ausdampfung sicher vermieden ist. Sowohl bei Verwendung von Erdgas als auch bei Teillastbetrieb entstehen durch die Entspannung der Teilmenge des dem Economizer entnommenen Wassers in nur einer Entspannungsstufe lediglich geringe thermodynamische Verluste.

Ein Ausführungsbeispiel der Erfindung wird anhand einer Zeichnung näher erläutert. Sie zeigt in einer schematischen Darstellung eine Gas- und Dampfturbinenanlage mit einem aus drei Druckstufen aufgebauten Wasser-Dampf-Kreislauf der Dampfturbine.

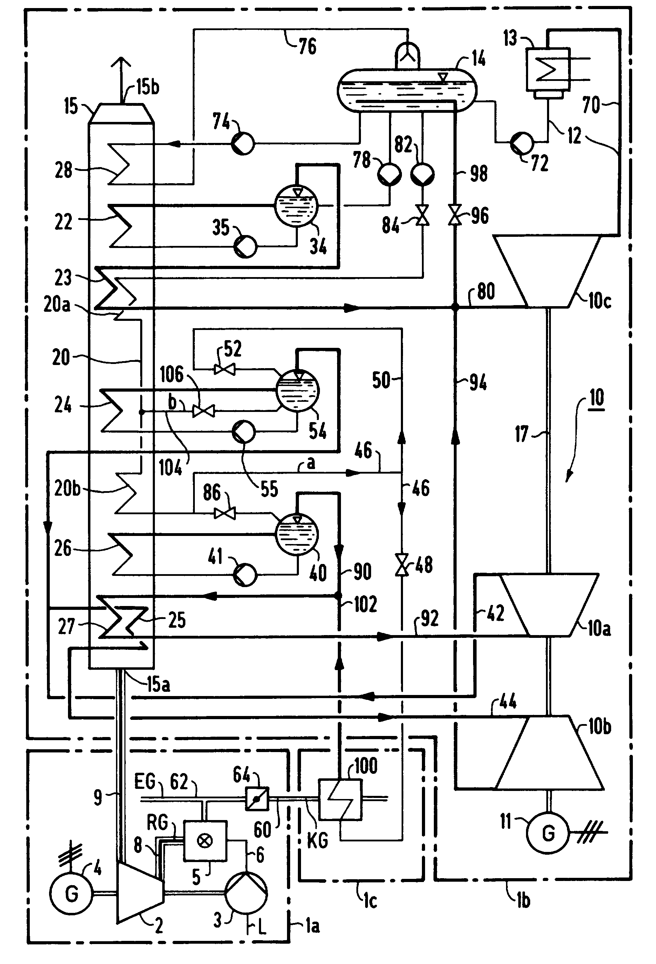

Die Gas- und Dampfturbinenanlage gemäß der Figur umfaßt eine Gasturbinenanlage la und eine Dampfturbinenanlage 1b. Der Gasturbinenanlage 1a ist eine Kohlevergasungsanlage 1c vorgeschaltet. Die Gasturbinenanlage 1a umfaßt eine Gasturbine 2 mit angekoppeltem Luftverdichter 3 und Generator 4 sowie eine der Gasturbine 2 vorgeschaltete Brennkammer 5, die an eine Frischluftleitung 6 des Luftverdichters 3 angeschlossen ist.

Die Dampfturbinenanlage 1b umfaßt eine Dampfturbine 10 mit angekoppeltem Generator 11 und in einem Wasser-Dampf-Kreislauf 12 einen der Dampfturbine 10 nachgeschalteten Kondensator 13 und einen dem Kondensator 13 nachgeschalteten Speisewasserbehälter 14 sowie einen Abhitzekessel 15.

Die Dampfturbine 10 besteht aus einem Hochdruckteil 10a, einem Mitteldruckteil 10b und einem Niederdruckteil 10c, die über eine gemeinsame Welle 17 den Generator 11 antreiben.

Zum Zuführen der Abgase AG aus der Gasturbine 2 in den Abhitzekessel 15 ist eine Abgasleitung 9 an einen Eingang 15a des Abhitzekessels 15 angeschlossen. Das Abgas AG verläßt den Abhitzekessel 15 über dessen Ausgang 15b in Richtung auf einen nicht dargestellten Kamin.

Der Abhitzekessel 15 umfaßt einen aus zwei hintereinander geschalteten Heizflächen 20a und 20b aufgebauten Hochdruck-Vorwärmer oder Economizer 20, eine Niederdruck-Heizeinrichtung 22, 23 eine Mitteldruck-Heizeinrichtung 24, 25 und eine Hochdruck-Heizeinrichtung 26, 27.

Die Niederdruck-Heizeinrichtung 22, 23 besteht aus einem Verdampfer 22 und einem Überhitzer 23, die zusammen mit dem Niederdruckteil 10c der Dampfturbine 10 sowie mit einem Vorwärmer 28 und einer Wasser-Dampf-Trommel 34 die Niederdruckstufe des Wasser-Dampf-Kreislaufs 12 bilden.

Die Hochdruck-Heizeinrichtung 26, 27 besteht aus einem Verdampfer 26 und einem Überhitzer 27, die zusammen mit dem Hochdruckteil 10a der Dampfturbine 10 sowie mit dem Economizer 20 und einer Wasser-Dampf-Trommel 40 die Hochdruckstufe des Wasser-Dampf-Kreislaufs 12 bilden.

Die Mitteldruck-Heizeinrichtung 24, 25 besteht aus einem Verdampfer 24 und einem Zwischenüberhitzer 25, der eingangsseitig über eine Dampfleitung 42 an den Hochdruckteil 10a und ausgangsseitig über eine Dampfleitung 44 an den Mitteldruckteil 10b der Dampfturbine 10 angeschlossen ist. Der Verdampfer 24 ist im Abhitzekessel 15 im Bereich zwischen den Heizflächen 20a und 20b des Hochdruck-Vorwärmers 20 angeordnet. Die Mitteldruck-Heizeinrichtung 24, 25 bildet zusammen mit dem Mitteldruckteil 10b der Dampfturbine 10 und einer Wasser-Dampf-Trommel 54 die Mitteldruckstufe des Wasser-Dampf-Kreislaufs 12.

An den Wasser-Dampf-Kreislauf 12 ist in Strömungsrichtung des Wassers hinter den Heizflächen 20b des Economizers 20 eine Abströmleitung 46 angeschlossen, die über ein Ventil 48 in die Kohlevergasungsanlage 1c führt. An die Abströmleitung 46 ist eine Ausgleichsleitung 50 angeschlossen, die über ein Ventil 52 in die Wasser-Dampf-Trommel 54 mündet.

Beim Betrieb der Gas- und Dampfturbinenanlage wird der Brennkammer 5 als Brennstoff Kohlegas KG aus der Kohlevergasungsanlage 1c über eine Zuführleitung 60 oder Erdgas EG über eine Zuführleitung 62 wahlweise zugeführt. Beim Übergang von Erdgasbetrieb auf Kohlegasbetrieb wird eine Klappe 64 betätigt, die im Ausführungsbeispiel in der Zuführleitung 60 liegt.

Der Brennstoff KG oder EG wird in der Brennkammer 5 mit der verdichteten Frischluft L aus dem Luftverdichter 3 verbrannt. Das bei der Verbrennung entstehende heiße Rauchgas RG dient als Arbeitsmittel und wird über eine Rauchgasleitung 8 in die Gasturbine 2 geleitet. Dort entspannt es sich und treibt dabei die Gasturbine 2 an. Diese wiederum treibt den Luftverdichter 3 und den Generator 4 an. Das aus der Gasturbine 2 austretende heiße Abgas AG wird über die Abgasleitung 9 in den Abhitzekessel 15 geleitet und dort zur Erzeugung von Dampf für die Dampfturbine 10 genutzt. Der aus dem Niederdruckteil 10c der Dampfturbine 10 austretende Dampf wird über eine Dampfleitung 70 dem Kondensator 13 zugeführt und kondensiert dort. Das Kondensat wird über eine Kondensatpumpe 72 in den Speisewasserbehälter 14 gepumpt. Aus dem Speisewasserbehälter 14 wird Wasser über eine Umwälzpumpe 74 in den Vorwärmer 28 gepumpt und dort vorgewärmt. Das im Vorwärmer 28 vorgewärmte Wasser strömt über eine Leitung 76 in den Speisewasserbehälter 14 zurück. Aus dem Speisewasserbehälter 14 wird über eine Niederdruck-Pumpe 78 vorgewärmtes Wasser in die Wasser-Dampf-Trommel 34 gepumpt. Danach wird das Wasser mit Hilfe des Verdampfers 22 verdampft. Dazu wird Wasser aus der Wasser-Dampf-Trommel 34 mit Hilfe einer Pumpe 35 in den Verdampfer 22 und von dort zurück in die Wasser-Dampf-Trommel 34 gepumpt. Der in der Wasser-Dampf-Trommel 34 abgetrennte Dampf wird dem Überhitzer 23 zugeführt und strömt von dort in überhitztem Zustand über eine Dampfleitung 80 in den Niederdruckteil 10c der Dampfturbine 10.

Das der Hochdruckstufe zugeführte Wasser aus dem Speisewasserbehälter 14 wird über eine Hochdruck-Pumpe 82 und ein Ventil 84 zunächst in den Hochdruck-Vorwärmer oder Economizer 20 gepumpt und dort aufgewärmt. Das in den Heizflächen 20a und 20b des Economizers 20 aufgewärmte Wasser strömt über ein Ventil 86 in die Wasser-Dampf-Trommel 40. Danach wird das Wasser mit Hilfe des Verdampfers 26 verdampft, wobei Wasser aus der Wasser-Dampf-Trommel 40 mittels einer Pumpe 41 in den Verdampfer 26 und von dort zurück in die Wasser-Dampf-Trommel 40 gepumpt wird. Der in der Wasser-Dampf-Trommel 40 gebildete Dampf strömt über eine Leitung 90 in den Überhitzer 27 und von dort in überhitztem Zustand über eine Dampfleitung 92 in den Hochdruckteil 10a der Dampfturbine 10. Der im Hochdruckteil 10a entspannte Dampf strömt über die Leitung 42 in den Zwischenüberhitzer 25 und von dort in den Mitteldruckteil 10b der Dampfturbine 10. Der im Mitteldruckteil 10b der Dampfturbine 10 entspannte Dampf strömt über eine Dampfleitung 94, die an die Dampfleitung 80 angeschlossen ist, zusammen mit dem Dampf aus dem Überhitzer 23 in den Niederdruckteil 10c der Dampfturbine 10. Ein Teil des aus dem Mitteldruckteil 10b der Dampfturbine 10 abströmenden Dampfes strömt bei geöffnetem Ventil 96 über eine Dampfleitung 98 in den Speisewasserbehälter 14.

Bei Kohlegasbetrieb, d.h. bei Verwendung von Kohlegas KG als Brennstoff für die Gasturbine 2, wird dem Wasser-Dampf-Kreislauf 12 in Strömungsrichtung hinter den Heizflächen 20b des Economizers 20 eine mit dem Ventil 48 einstellbare Teilmenge a des vorgewärmten und unter hohem Druck stehenden Wassers entnommen und über die Abströmleitung 46 dem Kohlevergasungsprozeß zugeführt. Die Teilmenge a ist unter anderem abhängig vom in der Kohlevergasungsanlage eingestellten Vergasertyp und beträgt bis zu 60% der den Economizer durchströmenden Wassermenge. In der Kohlevergasungsanlage 1c wird das vorgewärmte Wasser in einem Wärmetauscher 100 durch indirekten Wärmetausch mit dem beim Kohlevergasungsprozeß erzeugten Rohgas oder Kohlegas KG verdampft, wobei gleichzeitig das Kohlegas KG abgekühlt wird. Der dabei gebildete Dampf strömt über eine Dampfleitung 102 aus der Kohlevergasungsanlage 1c in den Überhitzer 27 der Hochdruckstufe.

Bei Teillastbetrieb oder bei Erdgasbetrieb, d.h. bei Verwendung von Erdgas EG als Brennstoff für die Gasturbine 2, strömt die für die Dampferzeugung nicht benötigte Teilmenge a des vorgewärmten und unter hohem Druck stehenden Wassers über die Ausgleichsleitung 50 in die Wasser-Dampf-Trommel 54. Dabei wird das vorgewärmte Wasser zunächst bis auf einen mittleren Druck entspannt; das dabei zurückbleibende Wasser wird bei demselben mittleren Druck im Verdampfer 24 verdampft. Dazu wird Wasser aus der Wasser-Dampf-Trommel 54 mittels einer Pumpe 55 in den Verdampfer 24 und von dort zurück in die Wasser-Dampf-Trommel 54 gepumpt. Dieser Dampf wird anschließend zusammen mit dem bei der Entspannung gebildeten Dampf und mit dem aus dem Hochdruckteil 10a der Dampfturbine 10 über die Dampfleitung 42 abströmenden Dampf im Zwischenüberhitzer 25 überhitzt; der überhitzte Dampf wird über die Dampfleitung 44 dem Mitteldruckteil 10b der Dampfturbine 10 zugeführt.

Zur Regelung der Wassermenge in der Wasser-Dampf-Trommel 54 und zur Einstellung des die Mitteldruckstufe durchströmenden Dampfes wird dem Wasser-Dampf-Kreislauf 12 eine weitere einstellbare Teilmenge b des vorgewärmten Wassers entnommen. Dazu ist an den Economizer 20 im Bereich zwischen dessen Heizflächen 20a und 20b eine Leitung 104 mit einem Ventil 106 angeschlossen, die mit der Wasser-Dampf-Trommel 54 verbunden ist.

Der für die Entspannung des im Economizer 20 vorgewärmten und unter hohem Druck stehenden Wassers erforderliche Betriebsbereich ist äußerst begrenzt, so daß die thermodynamischen Verluste nur gering sind. Außerdem wird durch die Verdampfung des in der Wasser-Dampf-Trommel 54 gesammelten Wassers und durch die Überhitzung des dabei gebildeten Dampfes in den Mitteldruck-Heizflächen 24 bzw. 25 die Wärmeleistung der Abgase AG aus der Gasturbine 2 in allen Lastbereichen unabhängig vom verwendeten Brennstoff optimal für die Dampferzeugung genutzt. Dabei wird gleichzeitig die Temperatur der den Abhitzekessel 15 verlassenden Abgase AG auf extrem niedrige Werte gesenkt, so daß der Gesamtwirkungsgrad der Anlage 1 besonders hoch ist.

## Patentansprüche

1. Verfahren zum Betreiben einer Gas- und Dampfturbinenanlage, bei dem das in der Gasturbine (2) entspannte Arbeitsmittel (RG) zur Erzeugung von Dampf für die Dampfturbine (10) genutzt wird, wobei einer Hochdruckstufe des Wasser-Dampf-Kreislaufs (12) der Dampfturbine (10) eine Teilmenge (a) vorgewärmten Wassers entnommen und bei Verwendung von Kohlegas (KG) als Brennstoff für die Gasturbine (2) zur Kühlung des Kohlegases (KG) verwendet wird,
**dadurch gekennzeichnet,**
daß sowohl bei Teillastbetrieb der Anlage als auch bei Verwendung von Erdgas (EG) als Brennstoff für die Gasturbine (2) die entnommene Teilmenge (a) entspannt und einer Mitteldruckstufe des Wasser-Dampf-Kreislaufs (12) der Dampfturbine (10) zugeführt wird.

2. Verfahren nach Anspruch 1,
**dadurch gekennzeichnet,** daß der Mitteldruckstufe des Wasser-Dampf-Kreislaufs (12) eine weitere Teilmenge (b) des vorgewärmten Wassers entnommen und der Mitteldruckstufe zugeführt wird.

3. Verfahren nach Anspruch 1 oder 2,
**dadurch gekennzeichnet,** daß das in der Mitteldruckstufe verdampfte Wasser zusammen mit dem bei der Entspannung gebildeten Dampf überhitzt und einem Mitteldruckteil (10b) der Dampfturbine (10) zugeführt wird.

4. Verfahren nach Anspruch 3,
**dadurch gekennzeichnet,** daß der der Mitteldruckstufe entnommene Dampf zusammen mit aus einem Hochdruckteil (10a) der Dampfturbine (10) abströmendem Dampf überhitzt wird.

5. Verfahren nach einem der Ansprüche 1 bis 4,
**dadurch gekennzeichnet,** daß der Hochdruckstufe des Wasser-Dampf-Kreislaufs (12) bis zu 60% des vorgewärmten Wassers entnommen wird.

6. Gas- und Dampfturbinenanlage mit einem der Gasturbine (2) nachgeschalteten Abhitzekessel (15), der einen in den Wasser-Dampf-Kreislauf (12) der Dampfturbine (10) geschalteten Hochdruck-Vorwärmer (20) und eine dem Hochdruck-Vorwärmer (20) nachgeschaltete Hochdruck-Heizeinrichtung (26, 27) umfaßt, und mit einer der Gasturbine (2) vorgeschalteten Kohlevergasungsanlage (1c), in die eine in Strömungsrichtung des Wassers hinter dem Hochdruck-Vorwärmer (20) an den Wasser-Dampf-Kreislauf (12) angeschlossene Abströmleitung (46) führt,
**gekennzeichnet durch** eine mit der Abströmleitung (46) verbundene Verbindungsleitung (50), die an eine Wasser-Dampf-Trommel (54) einer Mitteldruckstufe des Wasser-Dampf-Kreislaufs (12) angeschlossen ist, und eine Umschaltvorrichtung (48, 52), mittels der die in der Abströmleitung geführte Teilmenge (a) vorgewärmten Wassers bei Teillastbetrieb der Anlage oder bei Verwendung von Erdgas (EG) als Brennstoff für die Gasturbine der Wasser-Dampf-Trommel (54) zuführbar ist.

7. Anlage nach Anspruch 6,
**dadurch gekennzeichnet,** daß die Verbindungsleitung (50) durch ein Ventil (52) absperrbar ist.

8. Anlage nach Anspruch 6 oder 7,
**dadurch gekennzeichnet,** daß die Wasser-Dampf-Trommel (54) über einen im Abhitzekessel (15) angeordneten Zwischenüberhitzer (25) an einen Mitteldruckteil (10b) der Dampfturbine (10) angeschlossen ist.

9. Anlagen nach einem der Ansprüche 6 bis 8,
**dadurch gekennzeichnet,** daß der Hochdruck-Vorwärmer (20) aus zwei hintereinander geschalteten Heizflächen (20a, 20b) aufgebaut ist.

10. Anlagen nach Anspruch 9,
**dadurch gekennzeichnet,** daß die Wasser-Dampf-Trommel (54) im Bereich zwischen den Heizflächen (20a, 20b) des Hochdruck-Vorwärmers (20) an den Wasser-Dampf-Kreislauf (12) angeschlossen ist.

11. Anlage nach Anspruch 9 oder 10,
**dadurch gekennzeichnet,** daß der Verdampfer (24) im Abhitzekessel (15) im Bereich zwischen den Heizflächen (20a, 20b) des Hochdruck-Vorwärmers (20) angeordnet ist.

## Claims

1. Method for operating a gas and steam turbine plant, in which the working medium (RG) which is expanded in the gas turbine (2) is used in order to generate steam for the steam turbine (10), wherein a partial quantity (a) of preheated water is withdrawn from a high-pressure stage of the water-steam loop (12) of the steam turbine (10) and when coal gas (KG) is used as a fuel for the gas turbine (2) is used to cool the coal gas (KG), characterised in that both during partial-load operation of the plant and when natural gas (EG) is used as the fuel for the gas turbine (2), the partial quantity (a) which is withdrawn is expanded and supplied to a medium-pressure stage of the water-steam loop (12) of the steam turbine (10).

2. Method according to claim 1, characterised in that a further partial quantity (b) of the preheated water is withdrawn from the medium-pressure (sic) stage of the water-steam loop (12) and supplied to the medium-pressure stage.

3. Method according to claim 1 or 2, characterised in that the water, which is evaporated in the medium-pressure stage, is superheated together with the steam, which is formed during the expansion, and is supplied to a medium-pressure part (10b) of the steam turbine (10).

4. Method according to claim 3, characterised in that the steam, which is withdrawn from the medium-pressure stage, is superheated together with steam which is flowing off from a high-pressure part (10a) of the steam turbine (10).

5. Method according to one of the claims 1 to 4, characterised in that up to 60% of the preheated water is withdrawn from the high-pressure stage of the water-steam loop (12).

6. Gas and steam turbine plant having a waste heat boiler (15) which is connected downstream of the gas turbine (2) and which comprises a high-pressure preheater (20) connected into the water-steam loop (12) of the steam turbine (10) and a high-pressure heating device (26, 27) connected downstream of the high-pressure preheater (20), and having a coal gasification plant (1c) which is connected upstream of the gas turbine (2) and into which there leads an outflow line (46) which is connected to the water-steam loop (12) downstream of the high-pressure preheater (20), viewed in the direction of flow of the water, characterised by a connecting line (50) which communicates with the outflow line (46) and is connected to a water-steam drum (54) of a medium-pressure stage of the water-steam loop (12), and by a change-over arrangement (48, 52), by means of which the partial quantity (a) of preheated water that is conducted in the outflow line can be supplied to the water-steam drum (54) in the case of partial-load operation of the plant or when natural gas (EG) is used as the fuel for the gas turbine.

7. Plant according to claim 6, characterised in that the connecting line (50) can be blocked by means of a valve (52).

8. Plant according to claim 6 or 7, characterised in that the water-steam drum (54) is connected to a medium-pressure part (10b) of the steam turbine (10) by way of an intermediate superheater (25) which is arranged in the waste heat boiler (15).

9. Plant according to one of the claims 6 to 8, characterised in that the high-pressure preheater (20) is made up of two series-connected heating surfaces (20a, 20b).

10. Plant according to claim 9, characterised in that the water-steam drum (54) is connected to the water-steam loop (12) in the region between the heating surfaces (20a, 20b) of the high-pressure preheater (20).

11. Plant according to claim 9 or 10, characterised in that the evaporator (24) is arranged in the waste heat boiler (15) in the region between the heating surfaces (20a, 20b) of the high-pressure preheater (20).

## Revendications

1. Procédé pour faire fonctionner une installation à turbine à gaz et à turbine à vapeur, qui consiste à utiliser le fluide de travail (RG) détendu dans la turbine à gaz (2) pour produire de la vapeur pour la turbine à vapeur (10), une quantité partielle (a) d'eau préchauffée étant prélevée de l'étage haute pression du circuit (12) eau-vapeur de la turbine à vapeur (10) et étant utilisée, lors de l'utilisation de gaz de houille (KG) comme combustible pour la turbine à gaz (2), pour refroidir le gaz de houille (KG),
caractérisé
en ce qu'il consiste à détendre la quantité partielle (a) prélevée tant lors du fonctionnement en charge partielle de l'installation que lorsque l'on utilise du gaz naturel (EG) comme combustible pour la turbine à gaz (2) et à l'envoyer à un étage moyenne pression du circuit (12) eau-vapeur de la turbine à vapeur (10).

2. Procédé suivant la revendication 1
caractérisé en ce qu'il consiste à prélever une autre quantité partielle (b) de l'eau préchauffée de l'étage moyenne pression du circuit (12) eau-vapeur et à l'envoyer à l'étage moyenne pression.

3. Procédé suivant la revendication 1 ou 2,
caractérisé en ce qu'il consiste à surchauffer l'eau évaporée dans l'étage moyenne pression en même temps que la vapeur formée lors de la détente et à l'envoyer à une partie moyenne pression (10b) de la turbine à vapeur (10).

4. Procédé suivant la revendication 3,
caractérisé en ce qu'il consiste à surchauffer la vapeur prélevée de l'étage moyenne pression en même temps que la vapeur sortant d'une partie haute pression (10a) de la turbine à vapeur (10).

5. Procédé suivant l'une des revendications 1 à 4, caractérisé en ce qu'il consiste à prélever de l'étage haute pression du circuit (12) eau-vapeur jusqu'à 60 % de l'eau préchauffée.

6. Installation à turbine à gaz et à turbine à vapeur comprenant en aval de la turbine à gaz (2) une chaudière (15) de récupération qui renferme un préchauffeur (20) haute pression monté dans le circuit (12) eau-vapeur de la turbine à vapeur (10) et un dispositif de chauffage (26, 27) haute pression en aval du préchauffeur (20) haute pression et une installation (1c) de gazéification du charbon monté en aval de la turbine à gaz (2) et à laquelle mène un conduit (46) de dérivation raccordé en aval dans la direction d'écoulement de l'eau du préchauffeur (20) haute pression au circuit (12) eau-vapeur, caractérisée par un conduit (50) de liaison communiquant avec le conduit (46) de dérivation et raccordé à un tambour (54) eau-vapeur d'un étage moyen de pression du circuit (12) eau-vapeur et un dispositif (48,52) d'inversion au moyen duquel la quantité partielle (a) d'eau préchauffée envoyée dans le conduit de dérivation peut être envoyée en fonctionnement en charge partielle de l'installation ou lors de l'utilisation de gaz naturel (EG) comme combustible pour la turbine à gaz, au tambour eau-vapeur.

7. Installation suivant la revendication 6, caractérisée en ce que le conduit (50) de liaison peut être fermé par une vanne (52).

8. Installation suivant la revendication 6 ou 7, caractérisée en ce que le tambour (54) eau-vapeur est raccordé par un surchauffeur (25) intermédiaire disposé dans la chaudière (15) de récupération à une partie (10b) moyenne pression de la turbine à vapeur (10).

9. Installation suivant les revendications 6 à 8, caractérisée en ce que le préchauffeur (20) haute pression est constitué de deux surfaces de chauffe (20a,20b) montées en série.

10. Installation suivant la revendication 9, caractérisée en ce que le tambour (54) eau-vapeur est raccordé dans la zone comprise entre les surfaces de chauffe (20a,20b) du préchauffeur (20) haute pression au circuit (12) eau-vapeur.

11. Installation suivant la revendication 9 ou 10, caractérisée en ce que l'évaporateur (24) est disposé dans la chaudière (15) de récupération dans la zone comprise entre les surfaces de chauffe (20a,20b) du préchauffeur (20) haute pression.
